# EUROPÄISCHE PATENTSCHRIFT

(11) **EP 2 624 943 B1**
(45) Veröffentlichungstag und Bekanntmachung des Hinweises auf die Patenterteilung: **21.12.2016**
(21) Anmeldenummer: 11767637.9
(22) Anmeldetag: 07.10.2011
(51) Int. Cl.: B01F 3/04, B01F 5/04, B01F 7/00, B01J 19/00

(54) **VORRICHTUNG ZUR BEHANDLUNG EINER FLÜSSIGKEIT UND VERFAHREN ZUM BEHANDELN EINER SUSPENSION**
DEVICE FOR TREATING A LIQUID AND METHOD FOR TREATING A SUSPENSION
DISPOSITIF DE TRAITEMENT D'UN LIQUIDE ET PROCÉDÉ DE TRAITEMENT D'UNE SUSPENSION

(30) Priorität: 08.10.2010 DE 102010047947
(43) Veröffentlichungstag der Anmeldung: 14.08.2013
(73) Patentinhaber: Ultrasonic Systems GmbH, 10707 Berlin (DE)
(72) Erfinder: GRAU, Joerg, 86674 Baar/Schwaben (DE); OLIVERI, Carmelo, 89079 Ulm (DE)
(74) Vertreter: Stütz, Jan
(86) Internationale Anmeldenummer: PCT/EP2011/005022
(87) Internationale Veröffentlichungsnummer: WO 2012/045470

(56) Entgegenhaltungen:
- DE-A1- 3 912 517
- FR-A- 1 192 486
- FR-A1- 2 640 328
- US-A1- 2002 163 856
- US-A1- 2006 176 768
- US-A1- 2007 065 927
- US-B2- 6 719 450

## Beschreibung

Die Erfindung betrifft eine Vorrichtung zur Behandlung einer Flüssigkeit. Die Erfindung betrifft insbesondere eine Vorrichtung und ein Verfahren zum Behandeln einer Suspension.

Das Beladen einer Flüssigkeit mit Gas ist für vielfältige Zwecke vorteilhaft. Es ermöglicht beispielsweise chemische Reaktionen zwischen dem Gas und der Flüssigkeit oder zwischen dem Gas und in der Flüssigkeit enthaltenen Stoffen. Ein möglicher Einsatzzweck findet sich in der Behandlung von Wasser, sowohl von Trinkwasser als auch von Abwasser, wo durch das Einleiten entsprechend reaktiver Gase die Keimbelastung reduziert werden kann.

Aus der WO 2008/080618 A1 ist eine Vorrichtung zur Behandlung einer Flüssigkeit bekannt mit einem in einem Raum angeordneten mechanischen Kavitationselement und einer Gaszufuhreinrichtung, die sich durch das Kavitationselement erstreckt. Die Vorrichtung umfasst ferner einen akustischen Leistungswandler, der Schallwellen direkt in den Raum abstrahlt. Die Bewegungen des Kavitationselements sorgen für eine Vermischung des zugeführten Gases mit der zu behandelnden Flüssigkeit, bei der die mittlere Blasengröße noch relativ groß ist. Als zweite Maßnahme werden durch den akustischen Leistungswandler gleichzeitig Schallwellen unmittelbar in die Flüssigkeit eingeleitet, wodurch die mittlere Blasengröße in der gesamten Flüssigkeit weiter reduziert wird. Um mit der bekannten Vorrichtung und dem bekannten Verfahren eine sonochemische Lösung des Gases in der Flüssigkeit zu erreichen, bei der ein überwiegender Anteil des Gases in molekular dispersiv gelöster Form vorliegt, muss der Leistungswandler als Ultraschallgeber ausgebildet sein, der Frequenzen in einem Bereich zwischen 400 und 1500 kHz, vorzugsweise zwischen 600 und 1200 kHz liefert.

Aus der Veröffentlichungsschrift FR 2 640 328 A1, im Folgenden D1 genannt, ist eine Vorrichtung zur Behandlung einer Flüssigkeit bekannt, die einen Raum und ein darin rotierendes Pumpenrad aufweist. Dabei ist der Raum im Bereich des Kavitationselements mit einem Querschnitt mit unterschiedlichen, insbesondere spiralförmigen Rundungen, zum Ausgang erweitert, ausgebildet.

Die Veröffentlichungsschrift DE 3912 517 A1, im Folgenden D2 genannt, offenbart ein Verfahren und Vorrichtung zur Förderung und Trennung der Bestandteile eines Fluids, insbesondere einer Suspension. Dabei liegt der Fokus auf der Förderung eines Schlammes oder einer verunreinigten Flüssigkeit, wobei Kavitation eingesetzt wird. Der Raum dieser Vorrichtung ist dabei kreisförmig ausgebildet.

Die Patentschrift US 6 719 450 B2 und die Veröffentlichung US 2002/163856 A1 beschreiben beide Handmixer, welche einen scheibenförmigen Rührer besitzen. Beide Rührer haben Bohrungen oder Aussparungen, welche von der Oberseite des scheibenförmigen Rührers auf dessen Unterseite reichen.

Dokument US2006/0176768 beschreibt eine Vorrichtung zur Behandlung einer Flüssigkeit, mit einem Raum, einem im Raum angeordneten drehbaren Kavitationselement, wobei der Raum im Bereich des Kavitationselements einen Querschnitt mit unterschiedlichen Rundungen hat, wobei der Querschnitt des Raums eine Grundform eines Polygons mit abgerundeten Ecken aufweist.

Aufgabe der Erfindung ist es, das Beladen einer Flüssigkeit mit Gas noch effizienter zu gestalten.

Gelöst wird diese Aufgabe durch eine Vorrichtung mit den Merkmalen des Anspruchs 1 und durch ein Verfahren mit den Merkmalen des Anspruchs 13. Vorteilhafte und zweckmäßige Ausgestaltungen der erfindungsgemäßen Vorrichtung sind in den Unteransprüchen angegeben.

Gemäß einem ersten Aspekt umfasst die erfindungsgemäße Vorrichtung zur Behandlung einer Flüssigkeit einen Raum und ein im Raum angeordnetes drehbares Kavitationselement, insbesondere in Form eines Strömungskörpers. Der Raum hat im Bereich des Kavitationselements einen Querschnitt mit unterschiedlichen Rundungen.

Dieser Aspekt der Erfindung beruht auf der Erkenntnis, dass ein Querschnitt mit unterschiedlichen Rundungen einerseits einer unerwünschten Rotationsströmung der Flüssigkeit um die Drehachse des Kavitationselements entgegenwirkt, andererseits aber "tote" Raumecken vermeidet, in denen nur wenig Flüssigkeitsaustausch stattfindet. Die erfindungsgemäße Querschnittform des Raums unterstützt vielmehr die Bildung lokaler Verwirbelungen mit hohen Strömungsgeschwindigkeiten, was die Kavitationswirkung deutlich erhöht.

Vorzugsweise weist der Querschnitt des Raums eine Grundform eines Polygons mit abgerundeten Ecken auf. Durch die abgerundeten Ecken wird ein Flüssigkeitsstau in den Ecken effektiv vermieden.

Zur Vermeidung "stiller Buchten" im Raum sind die Seiten der polygonen Grundform bevorzugt konvex.

Allgemein ist eine Gestaltung des Raums vorteilhaft, bei dem die Grundform des Raumquerschnitts die eines regelmäßigen Polygons ist.

Als besonders vorteilhaft erweist sich ein Raum, dessen Querschnitt eine trilobulare Form hat. Eine solche Form weicht deutlich von einer Kreisform ab, die eine unerwünschte Rotationsströmung begünstigen würde, weist aber dennoch Wandabschnitte auf, die annähernd tangential zu einem allgemein kreisscheibenförmigen Kavitationselement verlaufen.

Grundsätzlich können aber auch Querschnitte des Raums vorteilhaft sein, deren Grundform die eines unregelmäßigen Polygons ist.

Gemäß einem zweiten Aspekt umfasst die erfindungsgemäße Vorrichtung zur Behandlung einer Flüssigkeit einen Raum und ein im Raum angeordnetes, im Wesentlichen scheibenförmiges Kavitationselement. Das Kavitationselement weist (vorzugsweise längliche) Durchtrittsöffnungen auf, deren Innenwände verrundet sind.

Dieser Aspekt der Erfindung beruht auf der Erkenntnis, dass eine solche Form der Durchtrittsöffnungen bei schneller Drehung des Kavitationselements eine optimale Beschleunigung der Flüssigkeit ermöglicht, ohne dass es zu einem unerwünschten Aufscheren der Flüssigkeit kommt.

Bei einer bevorzugten Ausführungsform der Erfindung erstrecken sich die Durchtrittsöffnungen jeweils von einer Oberseite vollständig durch das Kavitationselement hindurch zu einer Unterseite. Dies erlaubt grundsätzlich einen begrenzten Durchtritt der Flüssigkeit durch das Kavitationselement.

Eine bevorzugte Gestaltung der Durchtrittsöffnungen sieht vor, dass der Durchmesser der Durchtrittsöffnungen über deren axiale Höhe um weniger als 50%, vorzugsweise um weniger als 30%, weiter vorzugsweise um weniger als 20% variiert. Dadurch ist sichergestellt, dass sich keine Flüssigkeit in den Durchtrittsöffnungen sammelt.

Gemäß einer besonders bevorzugten Gestaltung der Durchtrittsöffnungen sind die Innenwände in Bereichen nahe der Oberseite und in Bereichen nahe der Unterseite unterschiedlich stark verrundet. Die Verrundungen können insbesondere so auf die Form des Kavitationselements abgestimmt werden, dass sich ein für die angestrebten Druckschwankungen günstiges Gesamtströmungsverhalten einstellt.

Die Durchtrittsöffnungen können auf der Oberseite und auf der Unterseite jeweils einen länglichen Rand wie ein Langloch haben.

Eine weitere bevorzugte Ausführungsform sieht vor, dass in Draufsicht der Rand der Durchtrittsöffnung auf der Oberseite mit dem zugehörigen Rand der Durchtrittsöffnung auf der Unterseite nicht deckungsgleich ist.

Insbesondere kann die Erstreckung des Rands auf der Oberseite und des Rands auf der Unterseite in Längsrichtung der Durchtrittsöffnung unterschiedlich groß und/oder versetzt sein.

In Verbindung mit den Verrundungen kann der Kavitationseffekt durch eine Anordnung der Durchtrittsöffnungen weiter optimiert werden, bei der jeweils der Mittelpunkt der Durchtrittsöffnung gegenüber dem Schnittpunkt ihrer mittleren Längsachse mit einem zu dieser Achse senkrechten Radius des Kavitationselements in Richtung der mittleren Längsachse versetzt ist.

Für die Behandlung von Wasser, insbesondere von Trinkwasser, ist eine Vorrichtung vorteilhaft, bei der der Raum in einem Gehäuse aus Kunststoff angeordnet ist. Ein Kunststoffgehäuse bietet gegenüber einem Metallgehäuse den Vorteil, dass es besser zu reinigen ist und nicht von Desinfektionsmittel angegriffen wird. Eine Zugabe von Elektrolyten zur Flüssigkeit ist ebenfalls ohne Probleme möglich.

Insbesondere in Kombination mit einem trilobularen Querschnitt des Raumes, in den ein Zulauf und ein Ablauf für die Flüssigkeit münden, ist eine Anordnung günstig, bei der der Zulauf und der Ablauf in einer radialen Richtung in einem Winkel von weniger als 180°, vorzugsweise in einem Winkel von etwa 120° zueinander angeordnet sind.

Hinsichtlich der Zufuhr eines Gases in die Flüssigkeit ist eine Gaszufuhrleitung bevorzugt, deren Mündung axial auf eine Oberseite des Kavitationselements gerichtet ist, vorzugsweise nahe der Drehachse des Kavitationselements.

Insbesondere kann die Gaszufuhrleitung zumindest abschnittsweise parallel zu einer Antriebswelle verlaufen, auf der das Kavitationselement angeordnet ist.

Eine Kosteneinsparung bei der Realisierung der erfindungsgemäßen Vorrichtung ergibt sich durch die Verwendung wenigstens eines akustischen Leistungswandlers, der so angeordnet ist, dass er Schallwellen direkt in den Raum abstrahlt, wobei die Frequenz der Schallwellen unterhalb des Ultraschallfrequenzbereichs liegt. Es hat sich gezeigt, dass im Vergleich zu der eingangs erwähnten, aus dem Stand der Technik bekannten Vorrichtung eine geringere Leistung des akustischen Leistungswandlers ausreicht, um eine gewünschte Bläschengröße zu erzielen.

Allgemein ist es mit den erfindungsgemäßen Maßnahmen möglich, einen sehr hohen Anteil an Gas in die Flüssigkeit einzubringen. Die erfindungsgemäße Vorrichtung eignet sich damit bestens zur Reinigung von Wasser, insbesondere von Trink- oder Abwasser. Sie ist insbesondere bei Zufuhr von Ozon, das sich molekular dispers in der Flüssigkeit lösen lässt, zum Entkeimen der Flüssigkeit oder generell zum Zerstören von Bakterien, Viren, Pilzsporen, Toxinen oder endokrinen Stoffen oder zum Denaturieren von Proteinen einsetzbar. Darüber hinaus lässt sich die Vorrichtung allgemein zur Gasbeladung von Flüssigkeiten, nicht nur von Wasser oder Abwasser, mit jedem geeigneten Gas verwenden.

Die Erfindung betrifft ferner ein Verfahren zum Behandeln einer Suspension, insbesondere mittels einer erfindungsgemäßen Vorrichtung, gekennzeichnet durch folgende Schritte:
Einleiten der zu behandelnden, dispersen Flüssigkeit in einen Raum, in welchem ein sich drehendes Kavitationselement untergebracht ist,

Drehen des Kavitationselements bis zur Erzeugung von Kavitation ohne Behandlung der Flüssigkeit mit Ultraschall, und
Zerkleinern der Teilchen in der Flüssigkeit durch die Kavitation.

Das erfindungsgemäße Verfahren arbeitet ohne die Beaufschlagung der Suspension mit Ultraschall, sondern ausschließlich mit dem mechanisch wirkenden Kavitationselement. An der Oberfläche dieses Kavitationselements bilden sich die kleinen Hohlräume in der Flüssigkeit, die implodieren. Durch dieses Implodieren werden die sich in der Flüssigkeit befindlichen Feststoffteilchen weiter zerkleinert. Das Zerkleinern der Teilchen erfolgt also nicht (nur) durch Auftreffen der Teilchen auf das Kavitationselement, sondern durch die frei werdende Energie bei den zahlreichen Implosionen an der Oberfläche des Kavitationselements.

Wenn Gas in die Suspension eingeleitet und ebenfalls durch die ultraschallfrei erzeugte Kavitation in der Suspension gelöst wird, wird gleichzeitig die Kavitation reduziert. Das Lösen von Gas in der flüssigen Phase kann Vorteile für die Suspension haben und gegebenenfalls gewünschte chemische Effekte hervorrufen. Ein Beispiel hierfür ist die Abwasserbehandlung.

Das erfindungsgemäße Verfahren wird besondere Vorteile bei der Herstellung von flüssiger Farbe, insbesondere eines Lackes, bringen, da hier die Farbpigmente besonders fein verteilt werden. Ferner ist das Verfahren vorteilhaft bei der Behandlung von Papierbeschichtungssuspensionen (z.B. Schlämmkreide) einsetzbar sowie beim Behandeln von Abwasser. Bezüglich der Abwasserbehandlung ist zu ergänzen, dass sich Keime im Schatten von Feststoffteilchen im Abwasser besonders gut halten können. Eine UV-Lichtbehandlung ist deshalb nur als unterstützende Maßnahme zu sehen. Wenn jedoch, wie durch die Erfindung gelehrt, die Feststoffteilchen noch weiter zerkleinert werden, ist die Keimbehandlung wesentlich wirkungsvoller. Das gleichzeitige Lösen von Gas in die Flüssigkeit kann zur Keimabtötung eingesetzt werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Seitenansicht einer erfindungsgemäßen Vorrichtung zur Durchführung es erfindungsgemäßen Verfahrens;
- Figur 2 eine teilgeschnittene Draufsicht auf die Vorrichtung in Figur 1;
- Figur 3 eine teilgeschnittene Draufsicht auf eine erfindungsgemäße Vorrichtung nach einer alternativen Ausführungsform, mit der ebenfalls das erfindungsgemäße Verfahren ausführbar ist;
- Figur 4 eine Draufsicht auf ein mechanisches Kavitationselement einer erfindungsgemäßen Vorrichtung;
- Figur 5 eine Schnittansicht entlang der Schnittlinie A-A in Figur 4;
- Figur 6 eine Schnittansicht entlang der Schnittlinie B-B in Figur 4;
- Figur 7 eine Schnittansicht entlang der Schnittlinie C-C in Figur 4; und
- Figur 8 eine Schnittansicht entlang der Schnittlinie D-D in Figur 4.

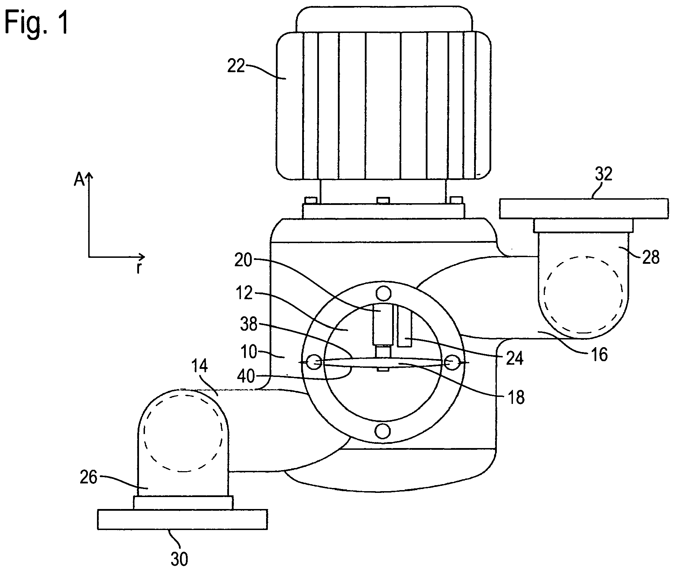

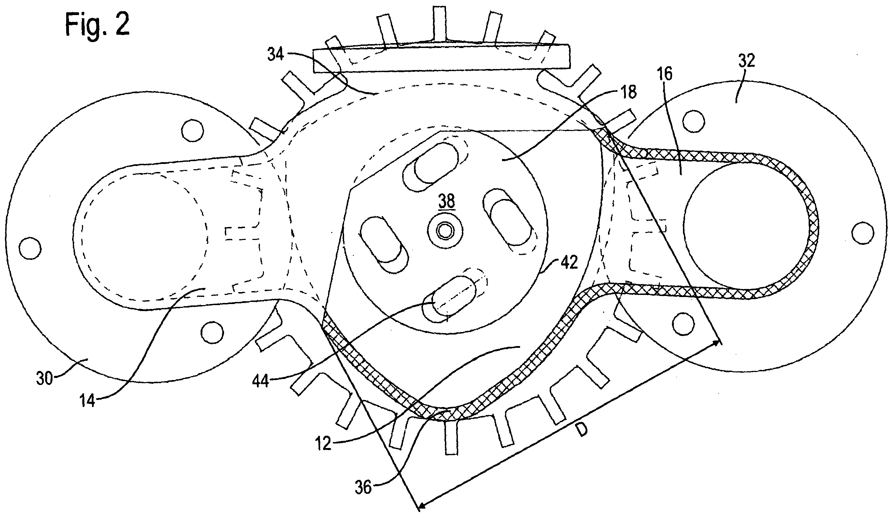

In den Figuren 1 und 2 ist eine erfindungsgemäße Vorrichtung zur Behandlung einer Flüssigkeit durch Beladen der Flüssigkeit mit Gas gezeigt. In der nachfolgenden Beschreibung werden zur Erleichterung des Verständnisses Angaben wie oben, unten, etc. verwendet. Diese Angaben beziehen sich auf eine Orientierung der Vorrichtung, wie sie in Figur 1 dargestellt ist. Die Vorrichtung kann aber grundsätzlich auch auf einer Seite liegend betrieben werden.

Der grundlegende Aufbau und die grundlegende Funktionsweise einer solchen Vorrichtung sind dem Fachmann bekannt, insbesondere aus der WO 2008/080618 A1, sodass hier vornehmlich auf die Besonderheiten der erfindungsgemäßen Vorrichtung eingegangen wird.

In einem Gehäuse 10 der Vorrichtung, das aus Metall oder Kunststoff gebildet sein kann, befindet sich ein Raum 12 zur Aufnahme einer Flüssigkeit. In den Raum 12 münden ein Zulauf 14 und ein Ablauf 16, sodass die Flüssigkeit kontinuierlich durch den Raum 12 strömen kann. In axialer Richtung A sind der Zulauf 14 und der Ablauf 16 versetzt zueinander angeordnet, in radialer Richtung r sind sie diametral gegenüberliegend (180°-Winkel) angeordnet.

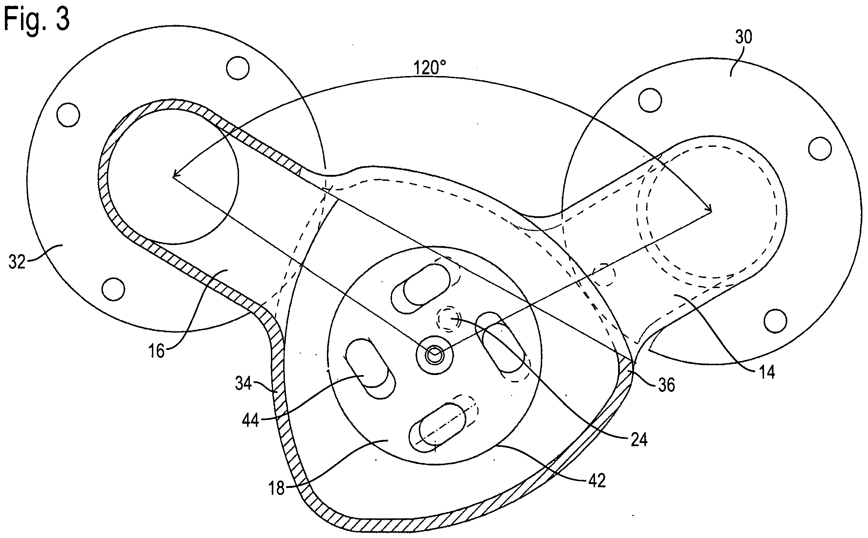

Figur 3 zeigt eine alternative Ausführungsform der Vorrichtung, bei der der Zulauf 14 und der Ablauf 16 in einem 120°-Winkel zueinander angeordnet sind.

Zentral im Raum 12 ist ein drehbar gelagertes mechanisches Kavitationselement 18 angeordnet, das als im Wesentlichen diskusförmiger Strömungskörper ausgebildet ist. Das Kavitationselement 18 ist über eine Antriebswelle 20 mit einem stufenlos regelbaren Motor 22 verbunden, der die Drehgeschwindigkeit des Kavitationselements 18 bestimmt.

Neben der Antriebswelle 20 ist eine parallel zu dieser in den Raum 12 mündende Gaszufuhrleitung 24 angeordnet, die Teil einer an eine Gasversorgung angeschlossenen Gaszufuhreinrichtung ist. Die Mündung der Gaszufuhrleitung 24 ist axial auf die Oberseite des Kavitationselements 18 gerichtet.

Am Zulauf 14 und am Ablauf 16, die sich in radialer Richtung erstrecken, sind zwei kurze, um 90° abgewinkelte Verbindungsstutzen 26, 28 angeordnet, an die jeweils ein akustischer Leistungswandler 30, 32 angeschlossen ist. Beide akustischen Leistungswandler 30, 32 sind als Schallgeber ausgebildet, die im Ultraschallbereich oder vorzugsweise in einem niedrigeren Frequenzbereich arbeiten.

Wie aus den Figuren 2 und 3 hervorgeht, weist der Raum 12 bei beiden Ausführungsformen eine besondere Gestalt auf. Der Raum 12 hat im Bereich des Kavitationselements 18 (entsprechend dem Teil des Raums 12, der das Kavitationselement 18 umgibt) einen von der Kreisform abweichenden, nicht rotationssymmetrischen Querschnitt (radialer Schnitt senkrecht zur Axialrichtung A).

In den dargestellten Ausführungsformen hat der Querschnitt des Raums 12 eine trilobulare Form, die man auch als "Dreieck-Rund" bezeichnen kann. Anders als bei einem echten Dreieck sind die Ecken abgerundet (kleine Rundung 36), und die Seiten sind nach außen gewölbt (große Rundung 34). Die trilobulare Form ist dadurch charakterisiert, dass trotz der dreieckig ausgerichteten Grundform der Rolldurchmesser D immer gleich bleibt, da sich eine große Rundung 34 und eine kleine Rundung 36 immer direkt gegenüber stehen.

Anstelle der dreieckigen Grundform kann auch eine Grundform mit mehr als drei Ecken (insbesondere mit vier oder fünf Ecken) vorgesehen sein, bei der die Ecken abgerundet und die Seiten nach außen gewölbt (konvex) sind. Auch andere, unregelmäßige Grundformen mit unterschiedlich stark ausgeprägten Rundungen sind möglich. Die dreieckige Grundform bietet jedoch bei vergleichbaren Wölbungen die größte Abweichung von einer Kreisform, was hinsichtlich der Kavitationswirkung erwünscht ist, wie später noch erläutert wird.

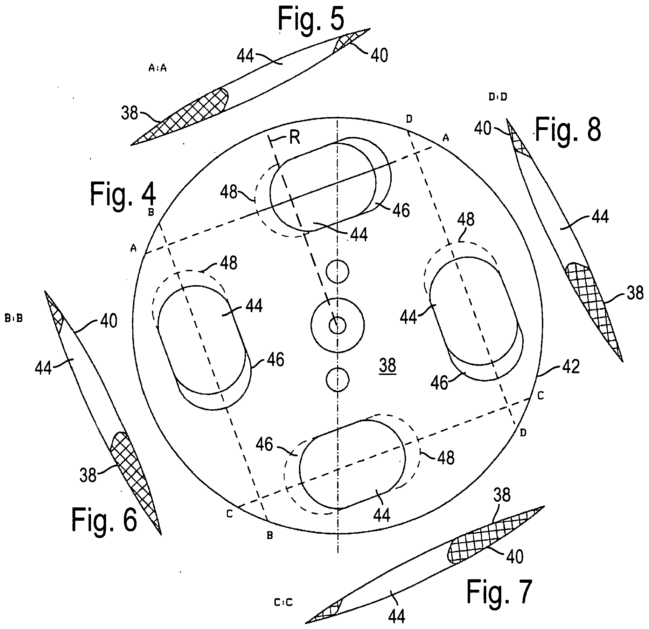

In Figur 4 ist das im Raum 12 drehbar angeordnete Kavitationselement 18 separat dargestellt. Das Kavitationselement 18 hat im Wesentlichen die Form eines Diskus (linsenförmige Scheibe) mit entgegengesetzten konvexen Seiten 38, 40, die an einem scharfen, kreisförmigen Umfangsrand 42 aufeinandertreffen. Die Krümmung der beiden Seiten 38, 40 kann unterschiedlich sein.

Das Kavitationselement 18 weist mehrere Durchtrittsöffnungen 44 auf, die sich von der Oberseite 38 vollständig durch das Kavitationselement 18 hindurch zur Unterseite 40 erstrecken. Die Durchtrittsöffnungen 44 haben auf der Oberseite 38 und auf der Unterseite 40 jeweils einen länglichen Rand 46 bzw. 48 wie ein Langloch. Jedoch sind in Draufsicht die Ränder 46 der Oberseite 38 mit den zugehörigen Rändern 48 der Unterseite nicht deckungsgleich, insbesondere die Erstreckung in Längsrichtung ist bei den oberseitigen und unterseitigen Rändern 46 bzw. 48 unterschiedlich groß und/oder versetzt. Dementsprechend kann der Umfang der oberseitigen Ränder 46 im Vergleich zu den zugehörigen unterseitigen Rändern 48 größer, kleiner oder gleich groß sein.

Wie aus den Schnittansichten der Figuren 5 bis 8 hervorgeht, sind die Innenwände der Durchtrittsöffnungen 44 nicht gerade, sondern verrundet. Das bedeutet zum einen, dass die Innenwände ein kurviges Profil haben, und zum anderen, dass sie - abgesehen von den Rändern 46, 48 - keine Kanten oder Ecken haben. In einigen Fällen ist die Verrundung - zumindest abschnittsweise - in den Bereichen nahe der Oberseite 38 stärker ausgeprägt als in den Bereichen nahe der Unterseite, in einigen Fällen ist es umgekehrt.

Ferner ist für die Durchtrittsöffnungen 44 charakteristisch, dass ihr Durchmesser - trotz der Verrundungen - über die axiale Höhe um weniger als 50% und vorzugsweise um weniger als 30% variiert. Im dargestellten Ausführungsbeispiel variiert der Durchmesser um deutlich weniger als 20%.

Die Durchtrittsöffnungen 44 sind außerdem so angeordnet, dass ihr Mittelpunkt gegenüber dem Schnittpunkt ihrer mittleren Längsachse (Schnittlinien A-A, B-B, C-C bzw. D-D) mit einem zu dieser Achse senkrechten Radius R des Kavitationselements 18 in Richtung der mittleren Längsachse versetzt ist.

Zur Gasbeladung einer Flüssigkeit mit der Vorrichtung durchströmt die Flüssigkeit den Raum 12 so, dass dieser vorzugsweise vollständig mit Flüssigkeit ausgefüllt ist. Das vollständig in die Flüssigkeit eingetauchte Kavitationselement 18 wird durch den Motor 22 in so schnelle Rotation versetzt, dass es in der Flüssigkeit zur Kavitation kommt.

Dabei sorgen die besondere Form des Raums 12 mit dem trilobularen Querschnitt (oder einem ähnlichen Querschnitt wie oben beschrieben) und die besondere Form des Kavitationselements 18 für eine Erhöhung der Kavitationswirkung.

Aufgrund der Querschnittform des Raums 12 mit den unterschiedlichen Rundungen 34, 36 gerät die Flüssigkeit durch die Drehung des Kavitationselements 18 nicht vollständig in eine unerwünschte rotierende Kreisströmung, die der Kavitationswirkung nicht zuträglich wäre. In den Ecken des Raums 12 bilden sich aber keine "toten" Stellen, in denen nur wenig Flüssigkeitsaustausch stattfindet, da die Ecken nicht scharf, sondern abgerundet sind. Die Form des Raums 12 sorgt auch dafür, dass sich möglichst wenige stehende Wellen im Raum 12 ausbilden.

Aufgrund der verrundeten Durchtrittsöffnungen 44 im Kavitationselement 18 bilden sich sehr hohe Strömungsgeschwindigkeiten nicht nur im Bereich des Umfangsrands des Kavitationselements 18, sondern auch im Bereich der Durchtrittsöffnungen 44 aus, wodurch gerade an diesen Stellen eine sehr hohe Kavitationswirkung resultiert. Die Durchtrittsöffnungen 44 wirken aber auch insbesondere bei hohen Drehzahlen des Kavitationselements 18 effektiv einer unerwünschten Aufscherung der Flüssigkeit entgegen.

Durch die besondere Form des Raumquerschnitts mit den unterschiedlichen Rundungen 34, 36 und die besondere Form der Durchtrittsöffnungen 44 des Kavitationselements 18 wird insgesamt eine unerwünschte Pumpenwirkung des Kavitationselements 18 auf die Flüssigkeit vermieden.

Durch die Gaszufuhrleitung 24 wird Gas in axialer Richtung A auf die Oberseite des Kavitationselements 18 geleitet. Das Gas kann auch in flüssiger Form, z. B. als flüssiger Sauerstoff, in das System eingespeist werden, wobei es bei Durchtritt durch die Gaszufuhrleitung 24 vorzugsweise bereits gasförmig vorliegt.

Aufgrund der hohen Kavitationswirkung wird das eingeleitete Gas praktisch vollständig in die Flüssigkeit eingebracht. Die eingeleitete Gasmenge kann beispielsweise 285 g/h für Sauerstoff in Brunnenwasser mit einer Temperatur von 15°C betragen.

Der gesamte Raum 12 wird gleichzeitig von den Schallwellen der akustischen Leistungswandler 30, 32 erfüllt sodass die durch das Kavitationselement 18 erzeugten Blasen sofort durch die Schallenergie weiterbearbeitet und dabei zerkleinert werden.

Insgesamt resultiert durch die Kavitation mithilfe des besonders geformten Kavitationselements 18 in dem besonders geformten Raum 12 und die zusätzliche Schallbehandlung der entstandenen Blasen in einem vergleichsweise niedrigen Frequenzbereich auf effiziente Weise eine mittlere Blasengröße im Nanometerbereich, und es wird ein großer Anteil von Blasen im Angströmbereich erzeugt. Dies führt dazu, dass ein großer Anteil des eingeleiteten Gases molekular dispers in der Flüssigkeit gelöst wird. Daher verbleibt das gesamte eingebrachte Gas über einen relativ langen Zeitraum in der Flüssigkeit.

Die Erfindung wurde anhand bevorzugter Ausführungsformen beschrieben. Selbstverständlich sind Abwandlungen und Ergänzungen im Ermessen des Fachmanns möglich, ohne dass dadurch der Erfindungsgedanke verlassen wird.

Mit der zuvor genannten Vorrichtung lassen sich Suspensionen sehr effektiv behandeln, indem die sich darin befindlichen Kleinstteilchen weiter zerkleinern lassen. Das Verfahren sieht folgende Schritte vor: Einleiten der zu behandelnden, dispersen Flüssigkeit in den Raum 12, in welchem das in Rotation versetzbare Kavitationselement 18 untergebracht ist, Drehen des Kavitationselements 18 bis zur Erzeugung von Kavitation ohne Behandlung der Flüssigkeit mit Ultraschall, und Zerkleinern der Teilchen in der Flüssigkeit durch die Kavitation. Bei diesem Verfahren wird im Raum 12 keine zusätzliche Ultraschallbehandlung durchgeführt. Auch vor dem Einleiten oder nach dem Entfernen der Suspension in bzw. aus dem Raum 12 wird diese nicht Ultraschall behandelt.

Das Verfahren arbeitet ohne die Beaufschlagung der Suspension mit Ultraschall, sondern ausschließlich mit dem mechanisch wirkenden Kavitationselement 18. An der Oberfläche dieses Kavitationselements 18 bilden sich die kleinen Hohlräume in der Flüssigkeit, die implodieren. Durch diese Implosionen werden die sich in der Flüssigkeit befindlichen Feststoffteilchen weiter zerkleinert.

Alternativ kann zusätzlich Gas in die Suspension eingeleitet und ebenfalls durch die ultraschallfrei erzeugte Kavitation in der Suspension gelöst werden. Das Lösen von Gas in der flüssigen Phase kann Vorteile für die Suspension haben und gegebenenfalls gewünschte chemische Effekte hervorrufen. Ein Beispiel hierfür ist die Abwasserbehandlung.

Das Verfahren kann bei der Herstellung von flüssiger Farbe, insbesondere eines Lackes, eingesetzt werden, da hier die Farbpigmente besonders fein verteilt werden.

Ferner ist das Verfahren vorteilhaft bei Papierherstellung eingesetzt werden. Das Verfahren sieht vor, die Feststoffteilchen in von Papierbeschichtungssuspensionen (z.B. Schlämmkreide) besonders gut in der Flüssigkeit zu verteilen und zu zerkleinern. Die so behandelten Suspensionen werden auf die Papierbahn aufgerakelt und sorgen für eine glatte Papieroberfläche.

Beim Behandeln von Abwasserwerden durch das Verfahren die Feststoffteilchen noch weiter zerkleinert, so dass die Keimbehandlung wesentlich wirkungsvoller wird. Das gleichzeitige Lösen von Gas in die Flüssigkeit kann zur Keimabtötung eingesetzt werden.

### Bezugszeichenliste

- 10: Gehäuse
- 12: Raum
- 14: Zulauf
- 16: Ablauf
- 18: Kavitationselement
- 20: Antriebswelle
- 22: Motor
- 24: Gaszufuhrleitung
- 26: erster Verbindungsstutzen
- 28: zweiter Verbindungsstutzen
- 30: erster akustischer Leistungswandler
- 32: zweiter akustischer Leistungswandler
- 34: große Rundung
- 36: kleine Rundung
- 38: Oberseite des Kavitationselements
- 40: Unterseite des Kavitationselements
- 42: Umfangsrand
- 44: Durchtrittsöffnungen
- 46: oberseitige Ränder
- 48: unterseitige Ränder

## Patentansprüche

1. Vorrichtung zur Behandlung einer Flüssigkeit, mit
- einem Raum (12),
- einem im Raum (12) angeordneten, im Wesentlichen scheibenförmigen Kavitationselement (18),
**dadurch gekennzeichnet, dass** das Kavitationselement (18) längliche Durchtrittsöffnungen (44) aufweist, deren Innenwände verrundet sind, wobei die Innenwände der Durchtrittsöffnungen (44) - in einer entlang der jeweiligen Durchtrittsöffnung (44) von der Oberseite (38) bis zu der Unterseite (40) des Kavitatationselementes (18) verlaufenden Schnittebene (A-A, B-B, C-C, D-D) betrachtet - kurvige Profile haben und abgesehen von den Rändern (44, 46) keine Kanten oder Ecken haben.

2. Vorrichtung nach Anspruch 1, **dadurch gekennzeichnet, dass** sich die Durchtrittsöffnungen (44) jeweils von einer Oberseite (38) vollständig durch das Kavitationselement (18) hindurch zu einer Unterseite (40) erstrecken, wobei der Durchmesser der Durchtrittsöffnungen (44) über deren axiale Höhe um weniger als 50%, vorzugsweise um weniger als 30%, weiter vorzugsweise um weniger als 20% variiert.

3. Vorrichtung nach Anspruch 1, **dadurch gekennzeichnet, dass** die Innenwände in Bereichen nahe der Oberseite (38) und in Bereichen nahe der Unterseite (40) unterschiedlich stark verrundet sind und/oder dass die Durchtrittsöffnungen (44) auf der Oberseite (38) und auf der Unterseite (40) jeweils einen länglichen Rand (46, 48) wie ein Langloch haben.

4. Vorrichtung nach einem der Ansprüche 1 oder 2 **dadurch gekennzeichnet, dass** in Draufsicht der Rand (46) der Durchtrittsöffnung (44) auf der Oberseite (38) mit dem zugehörigen Rand (48) der Durchtrittsöffnung (44) auf der Unterseite (40) nicht deckungsgleich ist, wobei vorzugsweise die Erstreckung des Rands (46) auf 10 der Oberseite (38) und des Rands (48) auf der Unterseite (40) in Längsrichtung der Durchtrittsöffnung (44) unterschiedlich groß und/oder versetzt ist.

5. Vorrichtung nach einem der Ansprüche 1 bis 4, **dadurch gekennzeichnet, dass** die Durchtrittsöffnungen (44) so angeordnet sind, dass ihr Mittelpunkt gegenüber dem Schnittpunkt ihrer mittleren Längsachse mit einem zu dieser Achse senkrechten Radius R des Kavitationselements (18) in Richtung der mittleren Längsachse versetzt ist.

6. Vorrichtung zur Behandlung einer Flüssigkeit nach Anspruch 1, **dadurch gekennzeichnet, dass** der Raum (12) im Bereich des Kavitationselements (18) einen Querschnitt mit unterschiedlichen Rundungen (34, 36) hat und dass der Querschnitt des Raums (12) eine Grundform eines Polygons mit abgerundeten Ecken aufweist.

7. Vorrichtung nach Anspruch 6, **dadurch gekennzeichnet, dass** die Seiten der polygonen Grundform konvex sind.

8. Vorrichtung nach Anspruch 7, **dadurch gekennzeichnet, dass** die Grundform des Querschnitts die eines regelmäßigen Polygons ist, wobei der Querschnitt des Raums (12) eine trilobulare Form hat.

9. Vorrichtung nach einem der Ansprüche 6 oder 7, **dadurch gekennzeichnet, dass** die Grundform des Querschnitts die eines unregelmäßigen Polygons ist.

10. Vorrichtung nach einem der Ansprüche 6 bis 9, **dadurch gekennzeichnet, dass** in den Raum (12) ein Zulauf (14) und ein Ablauf (16) münden, die in einer radialen Richtung r in einem Winkel von weniger als 180°, vorzugsweise in einem Winkel von etwa 120° zueinander angeordnet sind.

11. Vorrichtung nach einem der Ansprüche 6 bis 10, **gekennzeichnet durch** eine Gaszufuhrleitung (24), deren Mündung axial auf eine Oberseite des Kavitationselements (18) gerichtet ist, vorzugsweise nahe der Drehachse des Kavitationselements (18), wobei insbesondere die Gaszufuhrleitung (24) zumindest abschnittsweise parallel zu einer Antriebswelle (20) verläuft, auf der das Kavitationselement (18) angeordnet ist.

12. Vorrichtung nach einem der Ansprüche 6 bis 11, **gekennzeichnet durch** wenigstens einen akustischen Leistungswandler (30, 32), der so angeordnet ist, dass er Schallwellen direkt in den Raum (12) abstrahlt, wobei die Frequenz der Schallwellen unterhalb des Ultraschallfrequenzbereichs liegt.

13. Verfahren zum Behandeln einer Suspension, mittels einer Vorrichtung nach einem der vorhergehenden Ansprüche, **gekennzeichnet durch** folgende Schritte:
a) Einleiten der zu behandelnden, dispersen Flüssigkeit in einen Raum, in welchem ein sich drehendes Kavitationselement untergebracht ist,
b) Drehen des Kavitationselements bis zur Erzeugung von Kavitation ohne Behandlung der Flüssigkeit mit Ultraschall, und
c) Zerkleinern der Teilchen in der Flüssigkeit **durch** die Kavitation.

14. Verfahren nach Anspruch 13, **dadurch gekennzeichnet, dass** Gas in die Suspension eingeleitet und durch die ultraschallfrei erzeugte Kavitation in der Suspension gelöst wird.

15. Verfahren nach Anspruch 13 oder 14, **dadurch gekennzeichnet, dass** das Verfahren ein Verfahren zum Herstellen von flüssiger Farbe, insbesondere eines Lackes, ein Verfahren zur Behandlung einer Schlämmkreide für die Papieroberflächenbeschichtung oder ein Verfahren zum Behandeln von Abwasser ist.

## Claims

1. A device for treating a liquid, comprising
- a chamber, and
- a substantially disk-shaped cavitation element arranged within the chamber, **characterized in**
the cavitation element (18) having oblong passage openings (44) with rounded inner walls, the inner walls of the passage openings (44) - viewed in a cutting plane (AA, BB, CC, DD) extending along the respective passage opening (44) from the top (38) to the bottom side (40) of the cavitation element (18) - comprising curved profiles and aside from the edges (46, 48) having no edges or corners.

2. A device according to claim 1, **characterized in** the passage openings (44)) extending completely from the top (38) to the bottom side (40), wherein the diameter of the passage openings (44) varies by less than 50%, preferably by less than 30%, further preferably by less than 20%, over the axial height thereof.

3. A device according to claim 1, wherein the inner walls are rounded to different degrees in regions near the upper side (38) and in regions near the lower side (40) and/or wherein the passage openings (44) have an oblong edge like an elongated hole on each of the upper side (38) and the lower side (40).

4. A device according to claim 1 or 2 **characterized in that** the edge (46) of the passage openings (44) on the upper side (38) - viewed from a top perspective - , differs from the edge (48) of the passage openings (44) on the lower side (40) whereby preferably the size of the edge (46) on the upper side (38) differs from the size of the edge (48) on the lower side (40) and/or the edge (46) on the upper side (38) is offset in relation to, the edge (48) on the lower side (40) in the longitudinal direction of the passage opening (44).

5. A device according to one of the claims 1 to 4 **characterized in that** each of the passage openings (44) is arranged such that its center is offset relative to the point of intersection of its central longitudinal axis with a radius R of the cavitation element (18) perpendicular to this axis in the direction of the central longitudinal axis.

6. A device for treating a liquid according to claim 1, **characterized in that** the chamber (12) has a cross-section with different roundnesses (34, 36) in the region of the cavitation element (18) and wherein the cross-section of the chamber has a basic shape of a polygon with rounded corners.

7. A device for treating a liquid according to claim 6, **characterized in that** the sides of the polygonal basic shape are convex.

8. A device for treating a liquid according to claim 6 or 7, **characterized in that** the basic shape of the cross-section is that of an regular polygon, whereby the chamber (12) has a trilobular shape.

9. A device for treating a liquid according to claim 6 or 7, **characterized in that** the basic shape of the cross-section is that of an irregular polygon.

10. A device for treating a liquid according to one of the claims 6 to 9, **characterized in that** an inlet (14) and an outlet (16) open into the chamber (12) which are arranged at an angle of less than 180 degrees, preferably at an angle of about 120 degrees, in relation to each other in a radial direction r.

11. A device for treating a liquid according to one of the claims 6 to 10, **characterized in that** a gas supply pipe (24) is provided having a mouth directed axially on an upper side of the cavitation element (18), preferably near the axis of rotation of the cavitation element (18), wherein the gas supply pipe (24) extends at least in sections parallel to a drive shaft (20) on which the cavitation element (18) is arranged.

12. A device for treating a liquid according to one of the claims 6 to 11, **characterized in that** at least one acoustic power transducer (30, 32), is provided that is arranged to emit sound waves directly into the chamber (12), the frequency of the sound waves being below the ultrasonic frequency range.

13. A method of treating a suspension using a device according one of the preceding claims comprising the steps of:
a) introducing the disperse liquid to be treated into a chamber in which a rotating cavitation element is accommodated;
b) rotating the cavitation element until cavitation is generated without a treatment of the liquid with ultrasound; and
c) reducing the size of the particles in the liquid by the cavitation.

14. A method according to claim 13, wherein gas is introduced into the suspension and dissolved in the suspension by the cavitation generated in an ultrasound-free manner.

15. A method according to claim 13 or 14, wherein the method is a method of producing liquid paint, in particular a lacquer, a method of treating a whiting for paper surface coating, or a method of treating wastewater.

## Revendications

1. Dispositif pour le traitement d'un liquide avec
- un espace (12),
- un élément de cavitation (18), substantiellement en forme de disque, placé dans l'espace (12),
**caractérisé en ce que** l'élément de cavitation (18) présente des ouvertures de passage allongées (44) dont les parois intérieures sont arrondies, cependant que les parois intérieures des ouvertures de passage (44) ont des profils courbés - dans un plan de coupe (A-A, B-B, C-C, D-D) qui s'étend le long de l'ouverture de passage respective (44) du côté supérieur (38) au côté inférieur (40) de l'élément de cavitation (18) - et, à part les bords (44, 46), n'ont pas d'arêtes ou de coins.

2. Dispositif selon la revendication 1, **caractérisé en ce que** les ouvertures de passage (44) s'étendent respectivement d'un côté supérieur (38) à un côté inférieur (40) en traversant entièrement l'élément de cavitation (18), cependant que le diamètre des ouvertures de passage (44) varie sur leur hauteur axiale de moins de 50%, de préférence de moins de 30%, de manière encore préférée de moins de 20%.

3. Dispositif selon la revendication 1, **caractérisé en ce que** les parois intérieures sont plus ou moins arrondies dans des zones près du côté supérieur (38) et dans des zones près du côté inférieur (40) et/ou que les ouvertures de passage (44) sur le côté supérieur (38) et sur le côté inférieur (40) ont respectivement un bord allongé (46, 48) comme un trou oblong.

4. Dispositif selon l'une des revendications 1 ou 2, **caractérisé en ce qu'**en vue de dessus le bord (46) de l'ouverture de passage (44) sur le côté supérieur (38) ne coïncide pas avec le bord correspondant (48) de l'ouverture de passage (44) sur le côté inférieur (40), cependant que de préférence l'extension du bord (46) sur le côté supérieur (38) et du bord (48) sur le côté inférieur (40) est de taille différente ou est décalée différemment dans le sens longitudinal de l'ouverture de passage (44).

5. Dispositif selon l'une des revendications 1 à 4, **caractérisé en ce que** les ouvertures de passage (44) sont placées de telle manière que leur centre est décalé par rapport au point d'intersection de leur axe longitudinal central avec un rayon R de l'élément de cavitation (18), rayon qui est perpendiculaire à cet axe, en direction de l'axe longitudinal central.

6. Dispositif pour le traitement d'un liquide selon la revendication 1, **caractérisé en ce que** l'espace (12) a, dans la zone de l'élément de cavitation (18), une section transversale avec différents arrondis (34, 36) et que la section transversale de l'espace (12) présente la forme de base d'un polygone avec des coins arrondis.

7. Dispositif selon la revendication 6, **caractérisé en ce que** les côtés de la forme de base polygonale sont convexes.

8. Dispositif selon la revendication 7, **caractérisé en ce que** la forme de base de la section transversale est celle d'un polygone régulier, cependant que la section transversale de l'espace (12) a une forme trilobulaire.

9. Dispositif selon l'une des revendications 6 ou 7, **caractérisé en ce que** la forme de base de la section transversale est celle d'un polygone irrégulier.

10. Dispositif selon l'une des revendications 6 à 9, **caractérisé en ce qu'**une arrivée (14) et une sortie (16) qui sont placées dans un sens radial dans un angle de moins de 180°, de préférence dans un angle d'environ 120°, débouchent dans l'espace (12).

11. Dispositif selon l'une des revendications 6 à 10, **caractérisé par** une conduite d'alimentation en gaz (24) dont l'embouchure est dirigée axialement sur un côté supérieur de l'élément de cavitation (18), de préférence près de l'axe de rotation de l'élément de cavitation (18), cependant qu'en particulier la conduite d'alimentation en gaz (24) passe au moins par sections parallèlement à un arbre d'entraînement (20) sur lequel l'élément de cavitation (18) est placé.

12. Dispositif selon l'une des revendications 6 à 11, **caractérisé par** au moins un convertisseur de puissance acoustique (30, 32) qui est placé de telle manière qu'il rayonne des ondes sonores directement dans l'espace (12) cependant que la fréquence des ondes sonores se situe au-dessous de la gamme de fréquence ultrasonore.

13. Procédé pour le traitement d'une suspension au moyen d'un dispositif selon l'une des revendications précédentes, **caractérisé par** les étapes suivantes :
a) introduction du liquide dispersé à traiter dans un espace dans lequel un élément de cavitation qui tourne est logé,
b) rotation de l'élément de cavitation jusqu'à production de la cavitation sans traitement du liquide par ultra-sons et
c) broyage des particules dans le liquide par cavitation.

14. Procédé selon la revendication 13, **caractérisé en ce que** du gaz est introduit dans la suspension et est dissous dans la suspension par la cavitation produite sans ultrasons.

15. Procédé selon la revendication 13 ou 14, **caractérisé en ce que** le procédé est un procédé pour fabriquer de la peinture liquide, en particulier une laque, un procédé pour traiter une craie lévigée pour l'enduction de surfaces de papier ou un procédé pour traiter des eaux usées.
